# EUROPÄISCHE PATENTSCHRIFT

(11) **EP 3 141 497 B1**
(45) Veröffentlichungstag und Bekanntmachung des Hinweises auf die Patenterteilung: **26.06.2019**
(21) Anmeldenummer: 15184246.5
(22) Anmeldetag: 08.09.2015
(51) Int. Cl.: B65G 1/137, B65G 1/04

(54) **VERFAHREN ZUM EINLAGERN EINER MEHRZAHL VON IDENTISCHEN STÜCKGÜTERN IN EINE KOMMISSIONIERVORRICHTUNG**
METHOD FOR STORING A NUMBER OF IDENTICAL ARTICLES IN A COMMISSIONING SYSTEM
PROCEDE DE STOCKAGE D'UNE PLURALITE DE PRODUITS EN VRAC IDENTIQUES DANS UN DISPOSITIF DE PREPARATION DE COMMANDE

(43) Veröffentlichungstag der Anmeldung: 15.03.2017
(60) Teilanmeldung: 19162322.2
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 1 619 148
- EP-A1- 1 627 830
- EP-A1- 2 065 317
- EP-A1- 2 574 574
- DE-A1- 10 225 332
- DE-A1-102004 013 353
- DE-A1-102004 046 176
- DE-A1-102010 001 569
- DE-A1-102013 208 561
- DE-U1-202006 014 375
- DE-U1-202012 012 928
- US-A- 5 473 545
- ARXRowaSpain: "Robot Vmax de ARX-Rowa: Sistema de Carga y almacenamiento", YouTube, 11. März 2011 (2011-03-11), Seiten 1-1, XP054976384, Gefunden im Internet: URL:https://www.youtube.com/watch?v=hzQSrI XR7jM [gefunden am 2016-02-19]

## Beschreibung

Die vorliegende Erfindung betrifft ein Verfahren zum Einlagern einer Mehrzahl von identischen Stückgütern, insbesondere Arzneimittelpackungen, in eine Kommissioniervorrichtung.

Automatisierte Kommissioniervorrichtungen werden häufig in Apotheken eingesetzt, um Arzneimittelpackungen platzsparend lagern zu können. Die Arzneimittelpackungen können in den bekannten, für Apotheken geeigneten Kommissioniervorrichtungen chaotisch gelagert werden, d. h. die Arzneimittelpackungen werden in der Vorrichtung nicht an vorbestimmten Ablageplätzen gelagert, sondern an solchen Ablageplätzen, bei denen gerade ausreichend Lagerplatz vorhanden ist. Überflüssiges Leervolumen kann so vermieden werden, die Anzahl an gelagerten Arzneimittelpackungen pro m² Grundfläche erheblich erhöht werden. Die chaotische Lagerung wird regelmäßig für solche Arzneimittel bzw. Arzneimittelpackungen genutzt, deren Ausgabefrequenz eher gering ist (sogenannte Langsamdreher).

Bei Arzneimitteln bzw. Arzneimittelpackungen mit einer hohen Ausgabefrequenz wird regelmäßig die sortenreine Lagerung in Schachtsystemen genutzt, bei welcher eine Vielzahl von identischen Arzneimittelpackungen in üblicherweise geneigten Lagerschächten gelagert wird, bei deren Ende eine Auslöseeinrichtung angeordnet ist. Wird ein in einem Lagerschacht angeordnetes Arzneimittel angefordert, muss lediglich die Auslöseeinrichtung ausgelöst werden, um eine Arzneimittelpackung auszugeben. Wird ein Arzneimittel angefordert, das chaotisch gelagert ist, muss dieses mit einem Bediengerät bei seinem Lagerort ergriffen und ausgelagert werden. Die Auslagerung einer chaotisch gelagerten Arzneimittelpackung nimmt mehr Zeit in Anspruch, so dass insbesondere bei Kommissioniervorrichtungen mit erhöhter allgemeiner Auslagerungsfrequenz eine Kombination von chaotischer und sortenreiner Lagerung üblich ist.

Unabhängig davon, ob lediglich eine chaotische oder sortenreine Lagerung, oder eine Kombination beider Lagerarten verwendet wird, ist es üblich, dass mehrere Arzneimittelpackungen des gleichen Arzneimittels in die Kommissioniervorrichtung einzulagern sind. Bei bekannten Verfahren werden die Arzneimittelpackungen dazu entweder einzeln auf einer Einlagerungseinrichtung abgelegt und nacheinander in die Kommissioniervorrichtung bewegt, oder es wird eine Mehrzahl von identischen Arzneimittelpackungen auf einer Auflagefläche einer Einlagerungseinrichtung abgelegt. Einer Steuereinrichtung der Kommissioniervorrichtung wird dann manuell die Anzahl der abgelegten Arzneimittelpackungen mitgeteilt und dadurch der Start der Einlagerung initiiert. Die bekannten Verfahren sind zeitaufwendig (Einlagerung nacheinander) oder fehleranfällig (Angabe einer falschen Zahl abgelegter Arzneimittelpackungen).

Die DE 102 25 332 A1 beispielsweise offenbart einen Einlagerungspuffer für eine Kommissioniervorrichtung. Dieser umfasst eine Mehrzahl von Lagerflächen, auf welche nichtsortenreine Stückgüter beliebig abgelegt werden. Mittels eines Kamerasystems wird die Grundfläche sowie die Anordnung der Stückgüter ermittelt, und bei einem Umlagerungsvorgang zum Ermitteln eines auf den Stückgütern aufgebrachten Identifizierers wird schließlich die Höhe der Stückgüter erfasst. Mit dem Einlagerungspuffer werden die Stückgüter also vermessen und identifiziert. Die DE 102 25 332 A1 offenbart ein Verfahren zum Einlagern einer Mehrzahl von Stückgütern in eine Kommissioniervorrichtung mit zumindest einer Regalreihe, zumindest einer Einlagerungseinrichtung, einer Steuereinrichtung und einem mit der Steuereinrichtung gekoppelten Bediengerät, wobei mehrere Stückgüter in einem Auflagebereich einer Einlagerungseinrichtung angeordnet werden, wobei die Stückgüter entlang einer Einlagerungsrichtung in einen Entnahmebereich der Einlagerungseinrichtung bewegt werden, eine Greifvorrichtung des Bediengeräts in den Entnahmebereich bewegt wird, die Stückgüter mit der Greifvorrichtung ergriffen und aus dem Entnahmebereich über einen stirnseitigen Rand eines Auflagetisches des Bediengeräts auf den Auflagetisch bewegt werden, und wobei zumindest einem Sensorsystem erfassten Stückgutdaten und Größendaten der Stückgüter ermittelt wird.

Es ist daher Aufgabe der vorliegenden Erfindung, ein Verfahren bereitzustellen, mit welchem eine Mehrzahl identischer Stückgüter zeitsparend und mit reduzierter Fehlerhäufigkeit eingelagert werden kann.

Die Aufgabe wird gelöst durch ein Verfahren gemäß Patentanspruch 1. Bei dem erfindungsgemäßen Verfahren zum Einlagern einer Mehrzahl von identischen Stückgütern in eine Kommissioniervorrichtung mit zumindest einer Regalreihe, zumindest einer Einlagerungseinrichtung, einer Steuereinrichtung und einem mit der Steuereinrichtung gekoppelten Bediengerät werden mehrere identische Stückgüter auf einer Auflagefläche einer Einlagerungseinrichtung angeordnet und es wird erfasst, ob ein letztes Stückgut auf der Auflagefläche angeordnet wurde. Sobald dies erfasst ist, werden die Stückgüter entlang einer Einlagerungsrichtung in einen Entnahmebereich der Einlagerungseinrichtung bewegt, wobei die Einlagerungsrichtung der Bewegungsrichtung einer Einlagerungseinrichtung in die Kommissioniervorrichtung entspricht.

Wenn die Stückgüter in dem Entnahmebereich angeordnet sind, wird eine Greifvorrichtung des Bediengerätes in diesen Entnahmebereich bewegt, so dass die Greifvorrichtung auf die Stückgüter zugreifen kann, und die Stückgüter werden mit der Greifvorrichtung ergriffen und aus dem Entnahmebereich über einen stirnseitigen Rand eines Auflagetisches des Bediengerätes auf diesen Auflagetisch bewegt.

Die Stückgüter können sofort nach der Bewegung in die Kommissioniervorrichtung von der Einlagerungseinrichtung entnommen und gelagert werden. Es kann aber auch vorkommen, dass die Stückgüter erst auf der Entnahmeeinrichtung in ihrem jeweiligen Entnahmebereich zwischengepuffert werden, d. h. dass eine größere Anzahl von Stückgütern (also mehrere Gruppen von jeweils identischen Stückgütern) auf einer Einlagerungseinrichtung angesammelt wird, bevor die Stückgüter von dem Bediengerät aus ihrem jeweiligen Entnahmebereich bewegt werden.

Erfindungsgemäß wird die Anzahl der in dem Auflagebereich angeordneten Stückgüter auf der Basis von mit zumindest einem Sensorsystem erfassten Stückgutdaten und Größendaten der Stückgüter ermittelt, und zwar nachdem festgestellt wurde, dass ein letztes Stückgut in dem Auflagebereich angeordnet wurde.

Die Stückgutdaten werden erfasst, nachdem das letzte Stückgut abgelegt wurde, und können die Lage bzw. die Größe der Stückgüter und deren Anordnung zueinander, d. h. ob beispielsweise vier Stückgüter als ein Verbund nebeneinander oder beabstandet voneinander angeordnet sind, umfassen. Diese Daten werden mit einem dafür geeigneten Sensorsystem erfasst, beispielsweise einer Lichtgitterkombination oder einem Kamerasystem, und können eine Mehrzahl von beliebigen, dem Fachmann bekannten Sensoren umfassten.

Auf der Basis der Stückgutdaten und den der Steuereinrichtung bekannten Größendaten der Stückgüter kann die Steuereinrichtung eindeutig die Anzahl der abgelegten Stückgüter erfassen, und zwar unabhängig von der Art der Anordnung der Stückgüter zueinander.

Erfindungsgemäß ist es also nicht mehr notwendig, die genaue Anzahl der aufgelegten Stückgüter vor Beginn der Einlagerung an die Steuereinrichtung zu übermitteln. Die Einlagerung der Stückgüter wird damit beschleunigt, die Wahrscheinlichkeit von Fehlern verringert, da eine manuelle Angabe der Anzahl der einzulagernden Stückgüter unterbleiben kann.

Erfindungswesentlich ist, dass die Anzahl mit einem entsprechenden Sensorsystem nach der Ablage des letzten Stückgutes bestimmt wird. Wo und wie dies genau geschieht, ist für die Erfindung nicht wesentlich.

Bei einer Ausführungsform können die Stückgutdaten durch ein einem Auflagebereich zugeordnetes Auflagebereich-Sensorsystem ermittelt werden, bevor die Stückgüter entlang der Einlagerungseinrichtung in den Entnahmebereich bewegt werden. Eine entsprechende Verfahrensführung hat den Vorteil, dass zu einem frühen Zeitpunkt des Einlagerungsprozesses die genaue Anzahl der Stückgüter feststeht und somit genügend Zeit verbleibt, die optimale Verfahrensführung festzulegen (beispielsweise den Ort des Entnahmebereichs, bei dem es sich nicht um einen festdefinierten Bereich handelt, sondern der in Abhängigkeit von dem späteren Lagerort gewählt werden kann).Zur Ermittlung der Stückgutdaten kann beispielsweise ein einem Auflagebereich zugeordnetes Kamerasystem oder eine Lichtgitterkombination als Auflagebereich-Sensorsystem verwendet werden.

Bei einer Ausführungsform können die Stückgutdaten durch ein einer Einlagerungseinrichtung zugeordnetes Einlagerungs-Sensorsystem bei dem Bewegen der Stückgüter entlang der Einlagerungsrichtung oder nach dem Bewegen der Stückgüter in den Entnahmebereich ermittelt werden. Eine entsprechende Ausführungsform hat den Vorteil, dass die Stückgutdaten innerhalb der Vorrichtung erfasst werden, wo weniger Störsignale vorhanden sind. Die beiden vorgenannten Methoden zur Erfassung der Stückgutdaten können auch kombiniert werden, um die Sicherheit bei der Erfassung der Anzahl zu erhöhen (eine Abweichung zwischen der Anzahl erfasst durch die beiden Sensorsysteme weist dann auf einen Fehler hin).

Bei einer Ausführungsform können die Stückgutdaten durch ein einem Entnahmebereich zugeordnetes Entnahmebereich-Sensorsystem bei dem Bewegen der Stückgüter auf den Auflagetisch ermittelt werden. Bei dieser Ausführungsform wird die Anzahl der Stückgüter erst relativ spät im Einlagerungsprozess bestimmt, es kann so aber sichergestellt werden, dass genau die Anzahl der Stückgüter ermittelt wird, die später auch eingelagert wird. Denkbar ist es beispielsweise, dass während der Bewegung der Stückgüter in den Entnahmebereich ein Stückgut so verrutscht, dass es durch die Greifvorrichtung nicht sauber ergriffen und auf den Auflagetisch bewegt werden kann. Ein entsprechendes Stückgut wird bei dieser Ausführungsform nicht "mitgezählt". Ein weiterer Vorteil dieser Ausführungsform ist es, dass ein sehr simpel aufgebautes Sensorsystem genutzt werden kann; ggf. ist ein Sensor ausreichend, der die auftreffende Lichtmenge misst.

Bei dieser Ausführungsform können die Stückgutdaten der bewegten Stückgüter bzw. ein entsprechendes Signal von dem Sensorsystem beispielsweise anzeigen, zu welchem Zeitpunkt ein Stückgut über den stirnseitigen Rand des Auflagetisches bewegt wird. Anhand der Größendaten der einzulagernden Stückgüter, der Bewegungsgeschwindigkeit der Greifvorrichtung (oder der jeweiligen aktuellen Motorposition) und der Stückgutdaten bzw. des entsprechenden Signales kann die Steuereinrichtung die Anzahl der auf den Auflagetisch bewegten Stückgüter ermitteln, so dass eine manuelle Eingabe der Anzahl der Stückgüter überflüssig ist.

Die genaue Anordnung der Stückgüter ist bei dieser Ausführungsform unwesentlich, d. h. die Stückgüter können direkt aneinandergelegt werden, es können jedoch auch beliebige Abstände zwischen den Stückgütern vorhanden sein. Die Bewegung der Greifvorrichtung in den Entnahmebereich der Einlagerungseinrichtung wird stets so durchgeführt, dass sichergestellt ist, dass sämtliche einzulagernden Stückgüter ergriffen und auf den Auflagetisch bewegt werden. Bei dem Bewegen der Stückgüter aus dem Entnahmebereich auf den Auflagetisch ist es ferner unerheblich, ob die genaue Anordnung der Stückgüter erhalten bleibt, oder ob diese beispielsweise vor dem eigentlichen Bewegen auf den Auflagetisch zusammengezogen werden, d. h. gegebenenfalls zwischen den Stückgütern vorhandene Lücken werden bei dem oder nach dem Ergreifen und vor dem Bewegen auf den Auflagetisch geschlossen. Dies ist beispielsweise dann der Fall, wenn die Greifvorrichtung einen Backengreifer umfasst, bei dem eine oder beide Greifbacken durch eine Schwenkbewegung im "vorderen" Abschnitt aufeinander zubewegt werden, so dass ein V-förmiges Greifprofil entsteht. Bei der Bewegung der Greifvorrichtung bzw. der Greifbacken aus dem Entnahmebereich in Richtung auf den Auflagetisch wird dann das von dem stirnseitigen Rand am weitesten entfernte Stückgut zuerst erfasst bzw. ergriffen und in Richtung auf den Auflagetisch bewegt, bis das erste Stückgut auf das zweite Stückgut trifft und dieses ebenfalls mit in Richtung auf den Auflagetisch bewegt. Bei dieser Art der Einlagerung entsteht eine lückenlose Aneinanderreihung einer Mehrzahl von Stückgütern.

In einem solchen Fall erfasst der Sensor das Vorbeibewegen lediglich eines Objektes, nämlich eines Verbundes aus beispielsweise vier Stückgütern. In Kenntnis der Dimensionen bzw. der Stückgutdaten der Stückgüter, der Bewegungsgeschwindigkeit oder der aktuellen Motorposition der Greifvorrichtung sowie des von dem Sensor gelieferten Signals bzw. der Lageinformationen kann die Steuereinrichtung eindeutig ermitteln, dass der auf den Auflagetisch bewegte Verbund vier Stückgüter umfasst.

Zur genauen Berechnung der Anzahl der bewegten Stückgüter ist es erforderlich, dass der Steuereinrichtung Größendaten (also die Dimensionen / Abmessungen eines einzelnen Stückgutes) zu den einzulagernden Stückgütern vorliegen. Soll eine große Anzahl identischer Stückgüter eingelagert werden, ist es beispielsweise möglich, dass vor der Einlagerung dieser großen Anzahl an Stückgütern die Größendaten zu den einzulagernden Stückgütern einmal erfasst werden, und bei jedem Einlagerungsvorgang auf diese Größendaten zurückgegriffen wird, d. h. die Größendaten nicht vor jedem Einlagerungsvorgang erneuert werden.

Wird es bei einem Wechsel der Art der Stückgüter jedoch unterlassen, neue Größendaten zu den neuen einzulagernden Stückgütern bereitzustellen, kann dies dazu führen, dass eine automatische Ermittlung der Anzahl der einzulagernden Stückgüter misslingt.

Die Größendaten sind intern üblicherweise mit Identifizierungsinformationen zu Stückgütern verknüpft. Diese Identifizierungsinformationen sind für die Einlagerung und die spätere Auslagerung wichtig, da der Steuereinrichtung eindeutig bekannt sein muss, welches Stückgut an welchem Lagerort (sei es chaotische Lagerung auf einem Regalboden oder sortenreine Lagerung in einem Lagerschacht) gelagert ist. Für die reine Ermittlung der Anzahl der Stückgüter sind die über die Größendaten hinausgehenden Identifizierungsinformationen jedoch nicht wesentlich.

Die Identifizierungsinformationen sind üblicherweise auf den Stückgütern selber oder deren Umverpackung angebracht. Es kann aber vorkommen, dass die vorhandenen Identifizierungsinformationen nicht die Größendaten der einzulagernden Stückgüter umfassen. So ist es beispielsweise bei Arzneimitteln noch nicht üblich, dass die der Packung zugeordneten Identifizierungsinformationen Größendaten zu der Packung enthalten.

Um den oben beschriebenen Fall der Fehlberechnung zu vermeiden, kann es bei einer Ausführungsform vorgesehen sein, dass der Steuereinrichtung vor dem Bewegen der Stückgüter Identifizierungsinformationen bereitgestellt werden. Dabei kann derart vorgegangen werden, dass vor jedem neuen Einlagerungsprozess neue Identifizierungsinformationen bereitgestellt werden. Dies ist aber dann nicht notwendig, wenn eine große Anzahl identischer Stückgüter einzulagern ist, so dass man diesen "Zwang" zur Bereitstellung neuer Identifizierungsinformationen manuell oder durch die Steuereinrichtung gesteuert abschalten kann.

Wie oben bereits angemerkt, kann es vorkommen, dass für die einzulagernden Stückgüter keine Größendaten vorliegen (da neue Identifizierungsinformationen ggf. keine umfassen und die Daten noch nicht eingegeben oder erlernt wurden). Um zu vermeiden, dass eine manuelle Eingabe der Größendaten erfolgen muss, ist es bei einer bevorzugten Ausführungsform vorgesehen, dass die Steuereinrichtung vor einem neunen Einlagerungsprozess prüft, ob für die einzulagernden Stückgüter Größendaten vorhanden sind, und, sofern dies nicht der Fall ist, ein Benutzer zur Auflage eines einzelnen Stückgutes aufgefordert wird, dessen Größendaten erfasst und, zusammen mit Identifizierungsinformationen zu dem Stückgut, gespeichert werden. Nach dem Erfassen der Größendaten können die weiteren der einzulagernden Stückgüter ausgelegt und eingelagert werden. Eine entsprechende Ausführungsform vereinfacht das Einlagern "neuer" Stückgüter, da die Erfassung der Größendaten automatisiert ist, die Fehleranfälligkeit damit vermindert ist.

Ein Erfassen, dass ein letztes Stückgut auf einer Auflagefläche angeordnet wurde, kann beispielsweise dadurch erfolgen, dass ein Benutzer ein geeignetes Eingabemittel, beispielsweise ein Fußpedal oder einen Druckknopf, betätigt. Um den Einlagerungsvorgang weiter zu beschleunigen und zu vereinfachen, ist es bei einer bevorzugten Ausführungsform vorgesehen, dass das Anordnen des letzten Stückgutes der Mehrzahl der einzulagernden Stückgüter die Einlagerung initiiert. Dazu wird bei dieser bevorzugten Ausführungsform das Ablegen eines Stückgutes in einem Erfassungsbereich eines einer Auflagefläche zugeordneten Auflageerfassungssensors erfasst. Bei dieser Ausführungsform ist es also nicht mehr notwendig, nach dem Auflegen des letzten Stückgutes eine weitere Handlung vorzunehmen, das Ablegen in dem Erfassungsbereich des Auflageerfassungssensors initiiert die Bewegung der Stückgüter zu dem Entnahmebereich.

Sofern die Kommissioniervorrichtung ein Auflagebereich-Sensorsystem umfasst, ist es bei einer bevorzugten Ausführungsform vorgesehen, dass das Anordnen eines letzten Stückgutes in einem Auflagebereich durch das Auflagebereich-Sensorsystem ermittelt wird. Das Sensorsystem ist dann so auszugestalten, dass zum einen die abgelegten Stückgüter erfassbar sind, und zum anderen, dass ein Stückgut in einem bestimmten Erfassungsbereich angeordnet ist. Vorteilhafterweise wird dann ein Sensorsystem für die Erfassung der Lage der Stückgüter zueinander und die Lage zumindest eines Stückgutes in dem Erfassungsbereich genutzt, die Verwendung eines zweiten Sensorsystems wird also vermieden.

Wie bereits angedeutet, wird die Greifvorrichtung stets so weit in den Entnahmebereich bewegt, dass sichergestellt ist, dass sämtliche Stückgüter aus dem Entnahmebereich auf den Auflagetisch bewegt werden. Bei einer speziellen Ausführungsform des erfindungsgemäßen Verfahrens wird nicht lediglich das Ablegen als solches, sondern der genaue Ablageort des letzten Stückgutes ermittelt, und anhand des Ablageortes wird das Bewegen der Greifvorrichtung in den Entnahmebereich gesteuert. Der Ablageort kann von einem speziellen Sensorsystem oder einem bereits vorhandenen Sensorsystem ermittelt werden. Bei Kenntnis des genauen Ablageortes des letzten Stückgutes ist es also möglich, die genaue Eindringtiefe der Greifvorrichtung in den Entnahmebereich zu steuern. Es ist also bei dieser Ausführungsform nicht unbedingt notwendig, die Greifvorrichtung stets vollständig in den Entnahmebereich zu bewegen, so dass die Bewegung der Stückgüter aus dem Entnahmebereich auf den Auflagetisch weiter beschleunigt wird.

Die Anmeldung offenbart ferner eine Kommissioniervorrichtung. Die Kommissioniervorrichtung umfasst zumindest eine Regalreihe mit mindestens einem Regal mit einer Mehrzahl von übereinander angeordneten Regalböden. Auf diesen Regalböden können die einzulagernden Stückgüter chaotisch oder in auf den Regalböden ausgebildeten Lagerschächten gelagert sein. Die Kommissioniervorrichtung umfasst ferner zumindest eine Einlagerungseinrichtung mit einer Auflagefläche zur Aufnahme von einzulagernden Stückgütern, wobei diese nach Anordnung auf der Auflagefläche mit Hilfe der Einlagerungseinrichtung in die Kommissioniervorrichtung bewegt werden. Die Kommissioniervorrichtung umfasst darüber hinaus ein mit einer Steuereinrichtung gekoppeltes Bediengerät mit einem Auflagetisch zur Aufnahme eines oder mehrerer Stückgüter, wobei der Auflagetisch einen stirnseitigen, einer Einlagerungseinrichtung zugeordneten Rand aufweist. Das Bediengerät umfasst ferner eine Greifvorrichtung, mit welcher Stückgüter in dem Entnahmebereich einer Einlagerungseinrichtung ergriffen und von der Einlagerungseinrichtung über den stirnseitigen Rand auf den Auflagetisch bewegt werden können. Die Kommissioniervorrichtung umfasst ferner zumindest ein mit der Steuereinrichtung gekoppelten Sensorsystem, mit welchem Stückgutdaten erfassbar und an die Steuereinrichtung übermittelbar sind, wobei die Steuereinrichtung derart ausgebildet ist, dass die Anzahl der in dem Auflagebereich angeordneten identischen Stückgüter auf der Basis der Stückgutdaten und auf der Basis von Größendaten der Stückgüter ermittelbar ist.

Aufgrund der Verwendung des oben genannten Sensorsystems, mit welchem Stückgutdaten erfassbar sind, ist die Steuereinrichtung auf der Basis des von dem Sensorsystem gelieferten Signales bzw. der Stückgutdaten, ggf. unter Verwendung weiterer Daten, in der Lage, die Anzahl der bewegten Stückgüter automatisch zu ermitteln. Details dazu wurden bereits unter Bezugnahme auf das erfindungsgemäße Verfahren dargelegt.

Bei einem Beispiel der Kommissioniervorrichtung ist ein Sensorsystem als ein Auflagebereich-Sensorsystem ausgebildet, mit welchem Stückgutdaten der im Auflagebereich angeordneten Stückgüter erfassbar sind.

Bei einem Beispiel ist ein Sensorsystem als Einlagerungs-Sensorsystem ausgebildet, mit welchem Stückgutdaten bei dem Bewegen der Stückgüter entlang der Einlagerungsrichtung oder nach dem Bewegen der Stückgüter in den Entnahmebereich erfassbar sind.

Bei einem Beispiel ist ein Sensorsystem als ein einem Entnahmebereich zugeordnetes Entnahmebereich-Sensorsystem ausgebildet, mit welchem Stückgutdaten bei dem Bewegen der Stückgüter auf den Auflagetisch erfassbar sind.

Mit der Steuereinrichtung ist eine Auslöseeinrichtung gekoppelt, deren Betätigung ein Einlagern der Stückgüter initiiert, wobei bei dieser Einlagerung die Stückgüter mittels einer Einlagerungseinrichtung von dem Auflagebereich in den Entnahmebereich bewegt werden. Die Auslöseeinrichtung kann beispielsweise als ein Fußpedal oder ein einfacher Druckknopf ausgebildet sein, deren Betätigung die Einlagerung initiiert. Bei einer bevorzugten Ausführungsform ist es jedoch vorgesehen, dass die Auslöseeinrichtung als ein einem Auflagebereich einer Einlagerungseinrichtung zugeordneter Auflageerfassungssensor ausgebildet ist, welcher erfasst, wenn ein Stückgut oder ein Abschnitt eines Stückgutes in dem Erfassungsbereich abgelegt ist. Bei diesem Beispiel muss nach dem Ablegen des letzten Stückgutes also keine zusätzliche weitere Handlung vollzogen werden, um die Einlagerung der abgelegten Stückgüter zu initiieren. Das Ablegen des letzten Stückgutes in dem Erfassungsbereich initiiert die Einlagerung, so dass das Einlagern selber rascher durchgeführt werden kann.

Umfasst die Kommissioniervorrichtung ein Auflagebereich-Sensorsystem ist es bei einer bevorzugten Ausführungsform vorgesehen, dass die Auslöseeinrichtung durch das Auflagebereich-Sensorsystem bereitgestellt ist, d. h. dass auch die Funktionalität der Auslöseeinrichtung durch das Auflagebereich-Sensorsystem geleistet wird, die Anzahl der Bauteile also vermindert und die Kosten für die Vorrichtung gesenkt werden können.

Das Sensorsystem zum Erfassen des Bewegens von Stückgütern über den stirnseitigen Rand des Auflagetisches kann an einem beliebigen Bauteil im Bereich des Entnahmebereiches angeordnet sein, solange sichergestellt ist, dass mit dem Sensorsystem das Bewegen eines Stückgutes über den stirnseitigen Rand erfasst werden kann. Bei einer bevorzugten Ausführungsform ist es jedoch vorgesehen, dass das Sensorsystem bei dem stirnseitigen Rand des Auflagetisches selber angeordnet ist. Damit ist gewährleistet, dass das Sensorsystem stets im Hinblick auf die einzulagernden Stückgüter ideal positioniert ist, und so sichergestellt werden kann, dass dieses, unabhängig von der Beschaffenheit der Stückgüter, das Bewegen dieser über den stirnseitigen Rand erfassen kann.

Im Nachfolgenden werden die Vorrichtung sowie das erfindungsgemäße Verfahren unter Bezugnahme auf die beigefügte Zeichnung näher beschrieben, wobei:
Figur 1 eine perspektivische Ansicht eines ersten Beispiels einer Kommissioniervorrichtung zeigt;
Figur 2 eine Detailansicht des Frontbereiches des ersten Beispiels zeigt;
Figur 3 eine Draufsicht auf das erste Beispiel zeigt;
Figur 4 eine Detailansicht des Bediengerätes zeigt;
Figuren 5a - 5e verschiedene Stadien der Einlagerung gemäß einer ersten Ausführungsform des erfindungsgemäßen Verfahrens zeigen;
Figur 6 ein beispielhaftes Sensorsystem, und
Figuren 7a und 7b schematisch die Signale des Sensors beim Bewegen von Stückgütern über den Sensor zeigen.

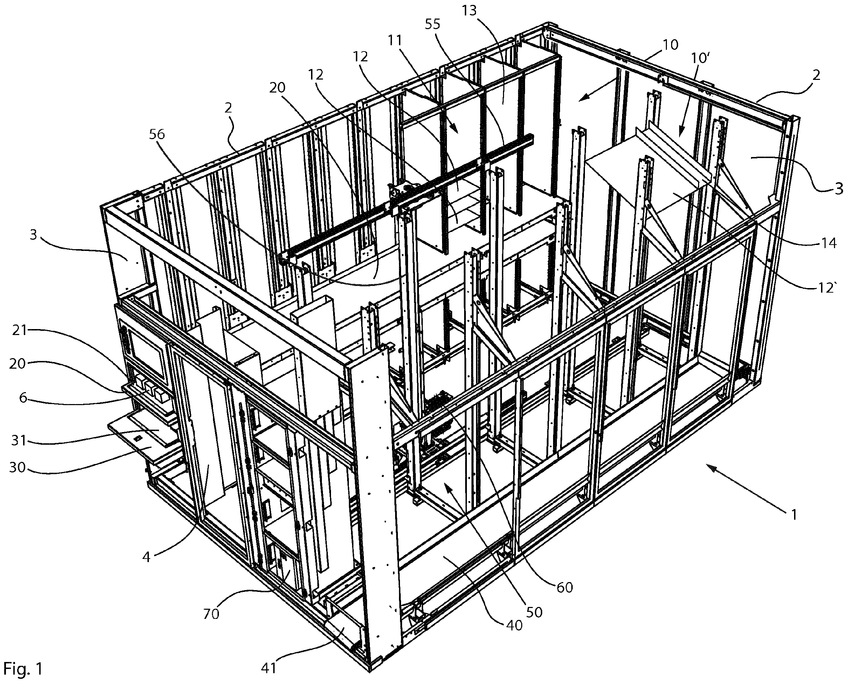

Figur 1 zeigt eine perspektivische Darstellung eines ersten Beispiels einer Kommissioniervorrichtung 1. Die Kommissioniervorrichtung 1 umfasst eine Gerüststruktur 2, an welcher eine Mehrzahl von Verkleidungselementen 3 angebracht ist. Der Übersicht halber sind eine Vielzahl der Verkleidungselemente sowie einige Elemente der Gerüststruktur 2 fortgelassen. Die Kommissioniervorrichtung 1 umfasst eine erste Regalreihe 10 mit mehreren Regalen, die jeweils eine Mehrzahl von übereinander angeordneten, sich in einer horizontalen Ebene erstreckende Regalböden 12 aufweisen (wobei in Figur 1 lediglich drei Regalböden 12 dargestellt sind; weitere Regalböden sind über, unter und neben den dargestellten angeordnet). Die einzelnen Regale 11 der ersten Regalreihe 10 sind durch Regalwände 13 und eine Mehrzahl der vorgenannten Regalböden 12 gebildet. Bei der gezeigten Ausführungsform sind alle Stirnkanten (Ladekanten) der Regalböden in einer vertikalen Ebene angeordnet, was das Ein- und Auslagern von Stückgütern bzw. Arzneimittelpackungen in und von den Regalböden vereinfacht. Die gezeigten Regalböden sind für eine chaotische Lagerung von Arzneimittelpackungen ausgebildet.

Bei dem gezeigten Beispiel der Kommissioniervorrichtung ist gegenüber der ersten Regalreihe 10 eine zweite Regalreihe 10' vorgesehen, die aber aus Gründen der Übersichtlichkeit nur angedeutet ist; lediglich einzelne Elemente des Stützgerüstes für diese Regalreihe und ein Regalboden 12' mit einem Lagerschacht 14 für die sortenreine Lagerung sind dargestellt.

Bei dem gezeigten Beispiel umfasst die Kommissioniervorrichtung zwei Einlagerungseinrichtungen 20, 30, die übereinander angeordnet und in die erste Regalreihe 10 integriert sind, so dass über und unter den beiden Einlagerungseinrichtungen 20, 30 Regalböden 12 vorgesehen sind. Die Einlagerungseinrichtungen 20, 30 ragen bei der Front der Kommissioniervorrichtung aus dieser heraus und umfassen bei dem herausragenden Teil einen Auflagebereich 21, 31, auf welchen Arzneimittelpackungen zur Einlagerung abgelegt werden können. Bei Figur 1 sind in dem Auflagebereich 21 der oberen Einlagerungseinrichtung 20 drei identische Arzneimittelpackungen 6 angeordnet.

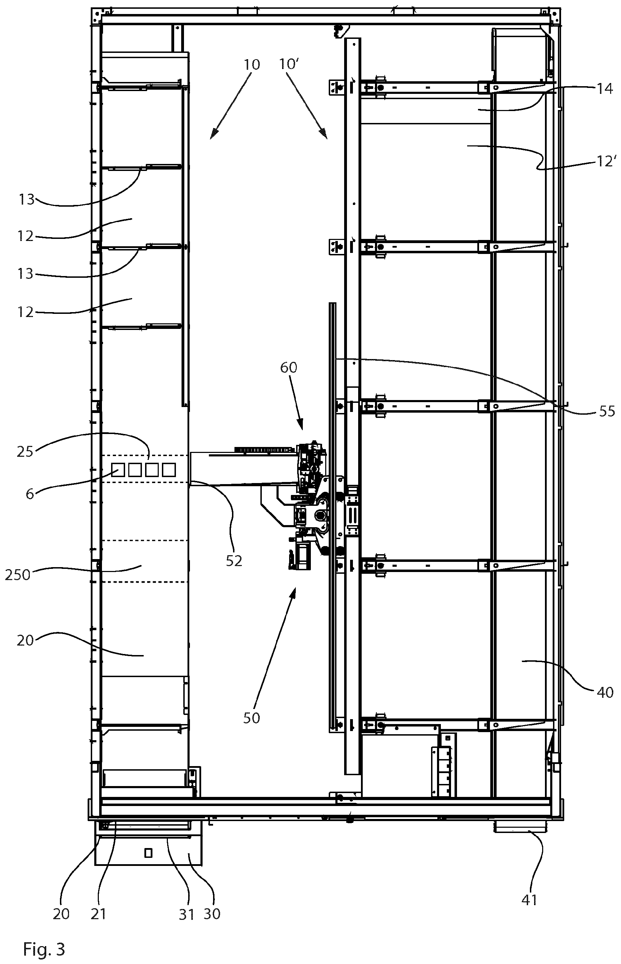

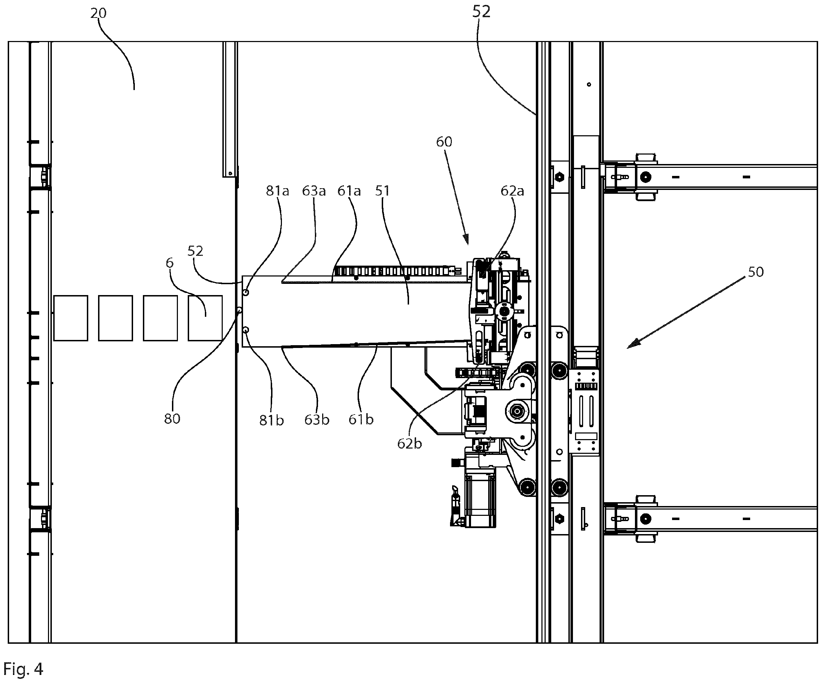

Zwischen der dargestellten ersten Regalreihe und der lediglich angedeuteten zweiten Regalreihe ist ein horizontal und vertikal an einer Führung verfahrbares Bediengerät 50 vorgesehen, welches unter Bezugnahme auf die Figuren 3 und 4 näher beschrieben wird. Dieses Bediengerät ist entlang einer lediglich angedeuteten Horizontalführung 55 und einer Vertikalführung 56 in einer Gasse zwischen den beiden Regalreihen verfahrbar.

In der Kommissioniervorrichtung ist ferner eine Auslagerungseinrichtung 40 angeordnet, die bei der gezeigten Ausführungsform als Bandförderer ausgebildet ist und zwischen der zweiten Regalreihe und der rechten Außenwand der Kommissioniervorrichtung angedeutet ist. Über die Auslagerungseinrichtung werden Arzneimittelpackungen, die auf die Auslagerungseinrichtung bewegt werden, zu einem Entnahmebereich 41 der Auslagerungseinrichtung bewegt. Die Arzneimittelpackungen können auf die Auslagerungseinrichtung gelangen, indem diese beispielsweise mit dem Bediengerät 50, gegebenenfalls unter Zwischenschaltung eines nicht dargestellten Hilfsauslagerungspfades, auf die Auslagerungseinrichtung bewegt werden. Bei den geneigten Lagerschächten können die Arzneimittelpackungen einfach durch Auslösen einer bei einem Ende eines Lagerschachtes angeordneten Auslöseeinrichtung auf die Auslagerungseinrichtung bewegt werden. In einem solchen Fall fallen die Arzneimittelpackungen einfach schwerkraftbedingt auf die Auslagerungseinrichtung.

Bei Figur 1 ist schließlich im Frontbereich der Kommissioniervorrichtung eine Steuereinrichtung 70 angeordnet, die mit dem Bediengerät, den Sensoren und Sensorsystemen, und üblicherweise den Einlagerungseinrichtungen und der Auslagerungseinrichtung gekoppelt ist. In der Mitte des Frontbereiches der Kommissioniervorrichtung ist eine Türöffnung 4 vorgesehen, durch welche die Vorrichtung zu Wartungszwecken und in Störfällen betreten werden kann.

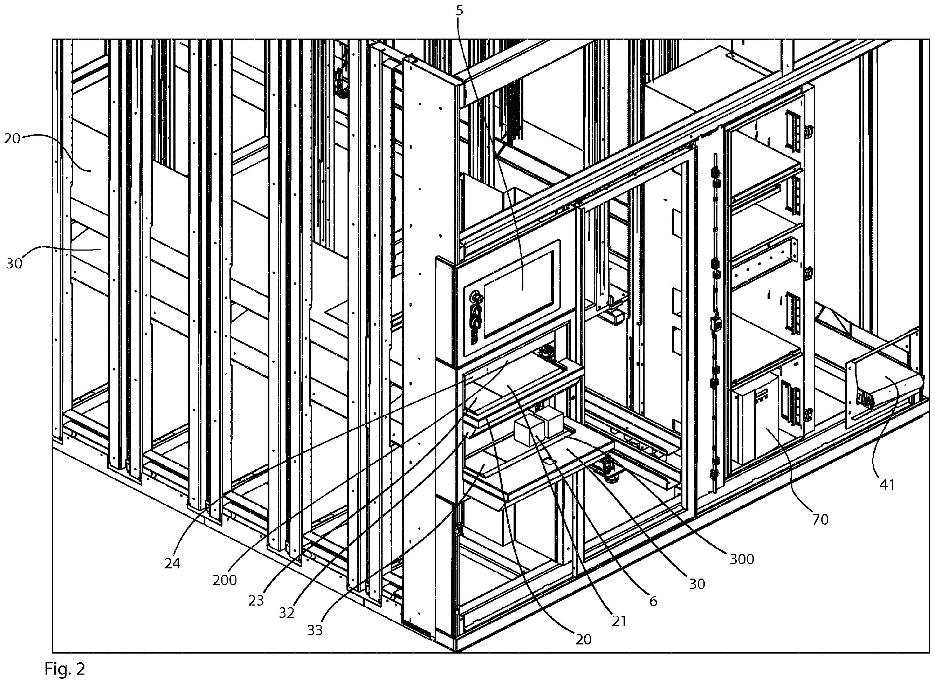

Figur 2 zeigt eine Detailansicht des Frontbereiches des ersten Beispiels der Kommissioniervorrichtung, wobei bei dieser Ansicht insbesondere der Auflagebereich der Einlagerungseinrichtung 20, 30 zu erkennen ist. Bei Figur 2 sind in dem Auflagebereich 31 der unteren Einlagerungseinrichtung 30 zwei identische Arzneimittelpackungen 6 angeordnet.

Jeweils über dem Auflagebereich einer Einlagerungseinrichtung ist ein Auflagebereich-Sensorsystem 200, 300 angeordnet. Beispielsweise kann es sich bei dem Sensorsystem um eine Lichtgitterkombination oder eine Kamera / eine Kamerakombination handeln, mit der Stückgutdaten ermittelt werden können, d. h. Daten über die Lage von Stückgütern auf dem jeweiligen Auflagebereich. In Abhängigkeit von der genauen Ausgestaltung des Auflagebereich-Sensorsystems kann mit diesem auch die Anordnung einer Arzneimittelpackung 6 in einem Erfassungsbereich 23 erfasst werden, ggf. unter genauer Bestimmung des Ortes der Anordnung (bezogen auf die Breite der Einlagerungseinrichtung 20). Detaillierter wird bei einer späteren Figur auf ein beispielhaftes Sensorsystem eingegangen.

Bei dem Auflagebereich-Sensorsystem 200 ist im "linken" Bereich ein alternativer Auflageerfassungssensor 24 angedeutet, mit welchem die oben genannten Funktionen ausgeführt werden können, sollte bei einer Ausführungsform kein Auflagebereich-Sensorsystem oder keines mit den oben genannten Funktionen verbaut sein.

Sobald ein Stückgut in einem Erfassungsbereich 23, 33 abgelegt wird, oder zumindest teilweise in den Erfassungsbereich hineinragt, wird der Steuereinrichtung 70 ein entsprechendes Signal übermittelt. Wie weit eine Arzneimittelpackung in einen Erfassungsbereich hineinragen muss, um ein vorgenanntes Signal auszulösen, kann bei der Steuereinrichtung oder dem Auflageerfassungssensor bzw. dem Sensorsystem selber eingestellt werden.

Bei Figur 2 ist ferner eine Ein- und/oder Ausgabeeinrichtung 5 über der oberen Einlagerungseinrichtung 20 angedeutet, mit welcher Informationen bezüglich der einzulagernden Arzneimittelpackungen angezeigt und/oder eingegeben werden können.

Figur 3 zeigt eine Draufsicht auf das erste Beispiel der Kommissioniervorrichtung, wobei der Übersicht halber ein Großteil des Stützgerüstes 2 fortgelassen ist. Auf der linken Seite ist die Einlagerungseinrichtung 20 zu erkennen, die von einem äußeren Bereich mit dem Auflagebereich 21 bis weit in die Kommissioniervorrichtung hineinführt. In einem Entnahmebereich 25 der Einlagerungseinrichtung 20 sind vier identische Arzneimittelpackungen 6 angeordnet. Bei dieser Darstellung ist auch zu erkennen, dass die Einlagerungseinrichtung in die erste Regalreihe 10 integriert ist, da im "oberen" Bereich Regalböden 12 und Regalwände 13 über der Einlagerungseinrichtung 20 angedeutet sind. Auf der rechten Seite ist die Auslagerungseinrichtung 40 mit dem Entnahmebereich 41 zu erkennen, und zum Inneren der Kommissioniervorrichtung hin schließt sich die zweite, lediglich angedeutete Regalreihe 10' an. Zwischen der ersten Regalreihe 10 und der zweiten Regalreihe 10' ist das horizontal und vertikal verfahrbare Bediengerät 50 angeordnet, wobei die Horizontalführung 55 sich normalerweise über die gesamte Länge der Kommissioniervorrichtung erstreckt, um mit dem Bediengerät sämtliche Regalböden der Vorrichtung erreichen zu können. Das Bediengerät 50 umfasst einen Auflagetisch 51 mit einem stirnseitigen Rand 52, über welchen Arzneimittelpackungen mit einer Greifvorrichtung 60 auf den Auflagetisch 51 gezogen werden.

In Figur 3 ist ferner zwischen dem Entnahmebereich 25 und dem Auflagebereich 21 ein Einlagerungs-Sensorsystem 250 angedeutet, mit welchem die Stückgutdaten von in Einlagerungsrichtung hin zu dem Entnahmebereich bewegten Stückgütern erfasst werden. Die genaue Ausgestaltung des Sensorsystems hängt von den jeweiligen genauen Anforderungen und baulichen Gegebenheiten ab. So ist auch hier die Verwendung eines Kamerasystems oder einer Lichtgitterkombination denkbar, wobei das Sensorsystem jedoch nicht auf die beiden vorgenannten Ausführungen beschränkt ist, sondern alle Sensorsysteme Anwendung finden können, die in der Lage sind, die notwendigen Stückgutdaten, also die genaue Anordnung der Stückgüter, zu ermitteln.

Figur 4 zeigt eine Detailaufnahme des Bediengerätes. Die Greifvorrichtung 60 des Bediengerätes 50 umfasst bei der gezeigten Ausführungsform zwei Klemmbacken 61a, 61b, die bei zwei Schwenkgelenken 62a, 62b derart verschwenkbar sind, dass die Spitzen 63a, 63b der Klemmbacken 61a, 61b aufeinander zu und voneinander weg bewegt werden können, ohne dass die Basis der Klemmbacken 61a, 61b wesentlich bewegt wird. Die gesamte Greifvorrichtung 60 kann über den Auflagetisch 51 hinein in den Entnahmebereich 25 der Auslagerungseinrichtung 20 bewegt werden, die Arzneimittelpackungen 6 in dem Entnahmebereich greifen und über den stirnseitigen Rand 52 des Auflagetisches 51 über einen bei dem Entnahmebereich angeordneten Sensor 80 und/oder über zwei Sensoren 81a, 81b bei dem stirnseitigen Rand des Auflagetisches 52 auf diesen ziehen, wobei die Sensoren bei dem Bewegen der Arzneimittelpackungen über diese ein Signal erzeugen und dieses an die Steuereinrichtung weitergeben. Bei der gezeigten Ausführungsform ist ein Sensor 80 bei dem Entnahmebereich 25, d. h. bei der Einlagerungseinrichtung 20, und zwei Sensoren 81a, 81b bei dem stirnseitigen Rand des Auflagetisches angeordnet. Diese Anordnung stellt lediglich eine mögliche Anordnung von Sensoren dar. Es ist auch möglich, lediglich einen Sensor bei dem Entnahmebereich oder dem stirnseitigen Rand des Auflagetisches zu verwenden. Die genaue Anzahl und Konfiguration der Sensoren ist nicht ausschlaggebend, wesentlich ist, dass das Bewegen der Arzneimittelpackungen aus dem Entnahmebereich auf den Auflagetisch mittels eines Sensors exakt erfasst werden kann.

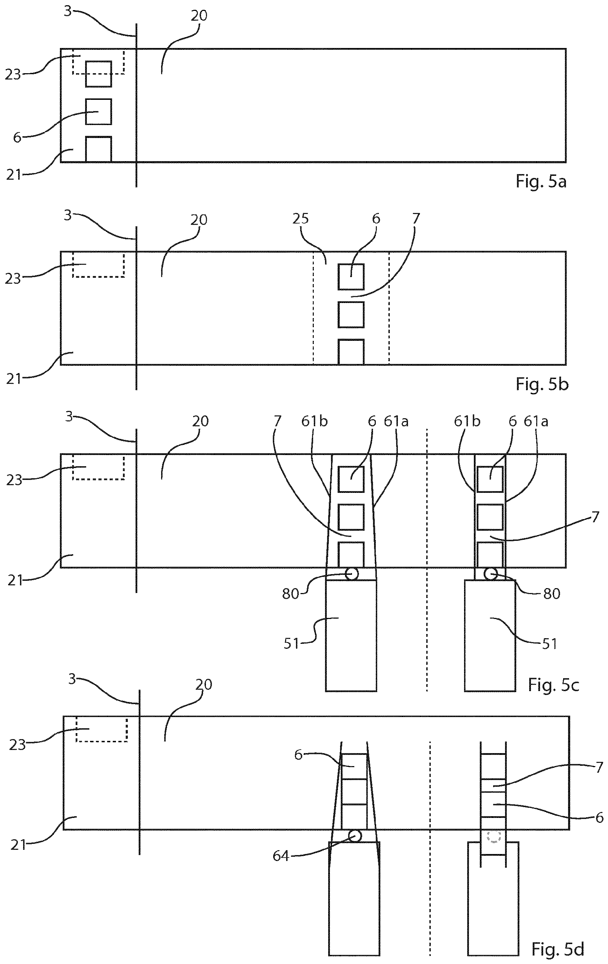

Die Figuren 5a - e zeigen verschiedene Stadien bei der Einlagerung einer Mehrzahl von identischen Stückgütern bzw. Arzneimittelpackungen. Zur Vereinfachung sind bei den vorgenannten Figuren lediglich die für die einzelnen Verfahrensschritte wichtigen Bauteile schematisch dargestellt.

Figur 5a zeigt eine Einlagerungseinrichtung 20 mit einem Auflagebereich 21 und einem Erfassungsbereich 23 eines (nicht dargestellten) Auflageerfassungssensors. In dem Auflagebereich 21 sind drei identische Stückgüter bzw. Arzneimittelpackungen 6 beabstandet voneinander angeordnet, wobei die "obere" Arzneimittelpackung in den Erfassungsbereich 23 hineinragt.

Das Hineinragen der oberen Arzneimittelpackung in den Erfassungsbereich 23 wird von dem (nicht dargestellten) dem Erfassungsbereich 23 zugeordneten Auflageerfassungssensor erfasst und der Steuereinrichtung übermittelt. Daraufhin werden die Stückgüter bzw. Arzneimittelpackungen 6 mit der Einlagerungseinrichtung 20 in einen Entnahmebereich 25 bewegt, wie dies in Figur 5b zu erkennen ist.

Der Entnahmebereich ist ein Abschnitt innerhalb der Kommissioniervorrichtung, auf welchen die Greifvorrichtung zum Bewegen der Arzneimittelpackungen von einer Einlagerungseinrichtung auf den Auflagetisch des Bediengeräts zugreift, indem die Greifvorrichtung in diesen Entnahmebereich bewegt wird. Der Entnahmebereich ist kein "ortsfester" Bereich innerhalb der Kommissioniervorrichtung, sondern kann in Abhängigkeit von der Position beispielsweise des Bediengeräts oder des Ablageorts der einzulagernden Stückgüter variieren.

Wie bereits angedeutet, kann die Greifvorrichtung zwei Klemm- oder Greifbacken aufweisen, die beispielsweise verschwenkt werden können. Alternativ ist es auch denkbar, dass die beiden Klemmbacken parallel zueinander verschiebbar angeordnet sind, und durch eine Verschiebung einer oder zweier Klemmbacken die Arzneimittelpackungen eingeklemmt bzw. ergriffen werden.

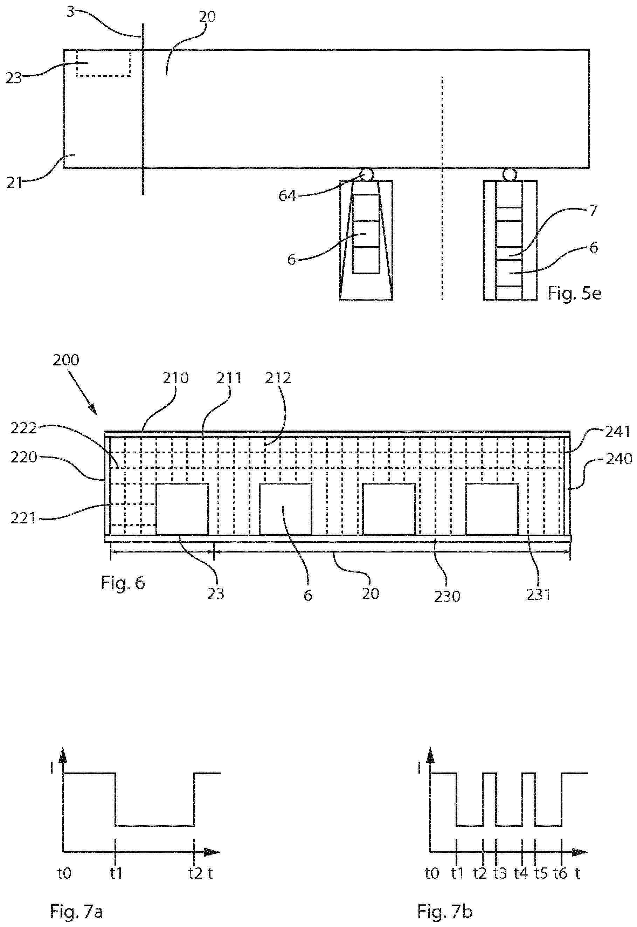

Bei Figur 5c sind die beiden vorgenannten Varianten, nämlich die verschwenkbaren Klemmbacken und die parallel verfahrbaren Klemmbacken, in einer Figur angedeutet, wobei bei beiden Darstellungen die Klemmbacken 61a, 61b noch nicht vollständig zugefahren sind, d. h. die Arzneimittelpackung/-en noch nicht gegriffen ist bzw. sind. Unabhängig von der Art der verwendeten Klemmbacken ist zwischen den Arzneimittelpackungen 6 (wie bei diesem Beispiel angeordnet) ein Freiraum 7 vorhanden. Die Arzneimittelpackungen können jedoch auch ohne Freiraum zwischen ihnen als Verbund mehrerer Arzneimittelpackungen auf dem Auflagebereich 21 angeordnet werden. Bei der gezeigten Ausführungsform ist dem Entnahmebereich 25 ein Sensor 80 zugeordnet, der ein Bewegen der Stückgüter auf den Auflagetisch 51 erfassen kann. Bei der Bewegung der Arzneimittelpackungen über den Sensor erzeugt dieser ein Signal (bzw. eine Signaländerung), welche(s) an die Steuereinrichtung weitergegeben wird, und auf Basis dieses Signals bzw. der diesem Signal entsprechenden Lageinformationen der Arzneimittelpackungen kann die Steuereinrichtung unter Verwendung weiterer Daten die Anzahl der bewegten Arzneimittelpackungen bestimmen (siehe dazu Figuren 6a, 6b).

Ausgehend von der Darstellung in Figur 5c werden die Klemmbacken 61a, 61b der Greifvorrichtung soweit zugefahren, dass bei der linken Darstellung die obere Arzneimittelpackung und bei der rechten Darstellung sämtliche Arzneimittelpackungen eingeklemmt bzw. ergriffen sind. Werden nun, wie dies bei Figur 5d angedeutet ist, die Packungen in Richtung auf den Auflagetisch 51 bewegt, so wird bei den verschwenkbaren Klemmbacken (linker Abschnitt der Figur 5d) zunächst lediglich die "obere" Arzneimittelpackung bewegt, und zwar derart, dass der Freiraum 7 zwischen der oberen und der mittleren Arzneimittelpackung geschlossen wird. Der Verbund der beiden Arzneimittelpackungen wird dann bei weiterer Bewegung der Klemmbacken hin zu dem Auflagetisch 51 zu der "unteren" Arzneimittelpackung bewegt, und es entsteht ein Verbund aus drei abstandfrei aneinander liegenden Arzneimittelpackungen.

Anders verhält es sich bei den Arzneimittelpackungen, die von der Greifvorrichtung mit den parallel verschiebbaren Klemmbacken ergriffen wurde, wie dies in Figur 5d rechts angedeutet ist. Aufgrund der Parallelverschiebung einer oder beider Klemmbacken 61a, 61b werden sämtliche Arzneimittelpackungen, die aufgrund der Identität der Arzneimittelpackungen die gleichen Dimensionen haben, zeitgleich ergriffen, so dass bei dem Bewegen der Klemmbacken hin zu dem Auflagetisch 51 keine Verschiebung der Arzneimittelpackungen aufeinander zu stattfindet, das heißt die Freiräume 7 zwischen den Arzneimittelpackungen erhalten bleiben.

Bei Figur 5e ist das "Resultat" der Greifbewegung zu erkennen. Bei der linken Darstellung mit den verschwenkbaren Klemmbacken 61a, 61b sind die drei Arzneimittelpackungen als ein abstandfreier Verbund auf den Auflagetisch 51 bewegt. Bei der rechten Darstellung mit den parallel verschiebbaren Klemmbacken sind die Arzneimittelpackungen entsprechend ihrer ursprünglichen Ablage auf den Auflagetisch 51 bewegt, das heißt zwischen den Arzneimittelpackungen ist noch immer ein Freiraum 7 vorhanden.

Die Figur 6 zeigt beispielhaft ein Sensorsystem 200, welches als Ablagebereich- 200, 300 oder Einlagerungs-Sensorsystem 250, 260 verwendet werden kann. Bei dem Sensorsystem handelt es sich um ein Lichtgitter, bzw. um eine Kombination von zwei Lichtgittern 210, 230 und 220, 240, umfassend ein horizontales Lichtgitter 210, 230 mit einer Mehrzahl von Lichtquellen 211 und Empfängern 231 und ein vertikales Lichtgitter 220, 240 mit ebenfalls einer Mehrzahl von Lichtquellen 221 und Empfängern 241. Ausgehend von den Lichtquellen 211, 221 werden Lichtstrahlen 212, 222 ausgestrahlt und bei den Empfängern 231, 241 empfangen. Basierend darauf, welche Lichtstrahlen einen Empfänger erreichen, werden die Stückgutdaten ermittelt.

Bei der gezeigten Ausführungsform scheinen die Lichtgitter auf gleicher Höhe bezogen auf die Bewegungsrichtung der Stückgüter angeordnet zu sein, dies ist aber praktisch nicht der Fall. Die Lichtgitter sind zumindest so weit voneinander entfernt, dass sich die Lichtstrahlen der Gitter nicht stören.

Alternativ kann ein Sensorsystem durch ein Kamerasystem realisiert werden, wobei die von dem Kamerasystem erfassten Daten (Bilder) einer Bildverarbeitung unterworfen werden, die die erforderlichen Stückgutdaten liefert.

Die Figuren 7a und 7b veranschaulichen das von dem Sensor 80 gelieferte Signal in Abhängigkeit von der Bewegung der Arzneimittelpackungen auf den Auflagetisch 51, wobei (bei dieser Ausführungsform) die X-Achse die Zeitachse und die Y-Achse die Signalintensität zeigt. Bei dieser Ausführungsform wird davon ausgegangen, dass der Sensor einfach die auf ihn auftreffende Lichtintensität misst. Bei anderen Ausführungsformen können andere Sensoren, beispielsweise Berührungssensoren, verwendet werden.

Die Figur 7a veranschaulicht die Bewegung des Verbundes aus drei Arzneimittelpackungen über den Sensor 80. Wie zu erkennen ist, nimmt die Intensität des von dem Sensor erfassten Lichtes zu einem Zeitpunkt t1 ab und steigt zu einem Zeitpunkt t2 wieder an. Auf der Basis der Zeitdauer Δt12 (t2-t1), der Anzahl der Signalveränderungen (Lageinformationen der Arzneimittelpackungen), der Bewegungsgeschwindigkeit der Klemmbacken sowie der Identifizierungsinformationen zu den Arzneimittelpackungen kann die Steuereinrichtung die Anzahl der bewegten Arzneimittelpackungen automatisch bestimmen.

Bei Figur 7a wurde eine Intensitätsänderung lediglich für ein Zeitintervall t1 / t2 ermittelt, und anhand der weiteren Informationen kann bestimmt werden, dass drei Arzneimittelpackungen auf den Auflagetisch bewegt wurden. Anders verhält es sich, wenn die Arzneimittelpackungen nicht zu einem Verbund zusammengeschoben bzw. -gezogen werden, sondern mit Freiräumen 7 zwischen den Arzneimittelpackungen über den Sensor bewegt werden. Dies ist in Figur 7b veranschaulicht, wo zu drei Zeitpunkten t1, t3, t5 eine Verminderung der Lichtintensität und zu drei Zeitpunkten t2, t4, t6 eine Zunahme der Lichtintensität erfasst wird, wobei der Zeitraum der verminderten Lichtintensität einer Bewegung einer Arzneimittelpackung über einen Sensor entspricht. Auf der Basis dieser Informationen Δt12 (t2-t1), Δt34 (t4-t3) und Δt56 (t6-t5), der Bewegungsgeschwindigkeit der Klemmbacken sowie der Identifizierungsinformationen zu den Arzneimittelpackungen kann eindeutig die Anzahl der Arzneimittelpackungen bestimmt werden.

## Patentansprüche

1. Verfahren zum Einlagern einer Mehrzahl von identischen Stückgütern in eine Kommissioniervorrichtung (1) mit
zumindest einer Regalreihe (10), zumindest einer Einlagerungseinrichtung (20, 30), einer Steuereinrichtung (70) und einem mit der Steuereinrichtung (70) gekoppelten Bediengerät (50), wobei
mehrere identische Stückgüter in einem Auflagebereich (21, 31) einer Einlagerungseinrichtung (20, 30) angeordnet werden,
erfasst wird, dass ein letztes Stückgut in einem Auflagebereich (21, 31) angeordnet wurde,
sobald dies erfasst ist, die Stückgüter entlang einer Einlagerungsrichtung in einen Entnahmebereich (25, 35) der Einlagerungseinrichtung (20, 30) bewegt werden,
eine Greifvorrichtung (60) des Bediengeräts (50) in den Entnahmebereich (25, 35) bewegt wird,
die Stückgüter mit der Greifvorrichtung (60) ergriffen und aus dem Entnahmebereich (25, 35) über einen stirnseitigen Rand (52) eines Auflagetisches (51) des Bediengeräts (50) auf den Auflagetisch (51) bewegt werden, wobei die Anzahl der in dem Auflagebereich (21, 31) angeordneten Stückgüter auf der Basis von mit zumindest einem Sensorsystem (80, 81a, 81b, 200, 300, 250, 260) erfassten Stückgutdaten und Größendaten der Stückgüter ermittelt wird, nachdem erfasst ist, dass ein letztes Stückgut in dem Auflagebereich (21, 31) angeordnet wurde.

2. Verfahren nach Anspruch 1, **dadurch gekennzeichnet, dass** die Stückgutdaten durch ein einem Auflagebereich (21, 31) zugeordnetes Auflagebereich-Sensorsystem (200, 300) ermittelt werden, bevor die Stückgüter entlang der Einlagerungseinrichtung in den Entnahmebereich (25, 35) bewegt werden.

3. Verfahren nach Anspruch 1 oder 2, **dadurch gekennzeichnet, dass** die Stückgutdaten durch ein einer Einlagerungseinrichtung (20, 30) zugeordnetes Einlagerungs-Sensorsystem (250, 260)
bei dem Bewegen der Stückgüter entlang der Einlagerungsrichtung oder
nach dem Bewegen der Stückgüter in den Entnahmebereich (25, 35) ermittelt werden.

4. Verfahren nach einem der Ansprüche 1 - 3, **dadurch gekennzeichnet, dass** die Stückgutdaten durch ein einem Entnahmebereich (25, 35) zugeordnetes Entnahmebereich-Sensorsystem (80, 81a, 81b) bei dem Bewegen der Stückgüter auf den Auflagetisch (51) ermittelt werden.

5. Verfahren nach einem der Ansprüche 1 - 4, **dadurch gekennzeichnet, dass** der Steuereinrichtung (70) vor dem Ablegen von Stückgütern in dem Auflagebereich (21, 31) Identifizierungsinformationen übermittelt werden.

6. Verfahren nach Anspruch 5, **dadurch gekennzeichnet, dass** die Steuereinrichtung (70) prüft, ob für die einzulagernden Stückgüter Größendaten vorhanden sind, und,
sofern dies nicht der Fall ist, ein Benutzer zur Auflage eines einzelnen Stückgutes aufgefordert wird, dessen Größendaten erfasst und, zusammen mit Identifizierungsinformationen zu dem Stückgut, gespeichert werden.

7. Verfahren nach einem der Ansprüche 1 - 6, **dadurch gekennzeichnet, dass** das Anordnen eines letzten Stückgutes in einem Auflagebereich (21, 31) erfasst wird, indem
das Anordnen eines Stückgutes in einem Erfassungsbereich (23, 33) eines einem Auflagebereich (21, 31) zugeordneten Auflageerfassungssensors (22, 32) erfasst wird.

8. Verfahren nach Anspruch 2 - 7, **dadurch gekennzeichnet, dass** das Anordnen eines letzten Stückgutes in einem Auflagebereich (21, 31) durch das Auflagebereich-Sensorsystem (200, 300) ermittelt wird.

9. Verfahren nach einem der Ansprüche 1 - 8, **dadurch gekennzeichnet, dass** der Ablageort des letzten Stückgutes ermittelt und anhand des Ablageortes das Bewegen der Greifvorrichtung (60) in den Entnahmebereich (25, 35) gesteuert wird.

## Claims

1. Method for storing a plurality of identical piece goods in a picking device (1), which comprises
at least one rack row (10), at least one storage device (20, 30), a control unit (70), and an operator unit (50) coupled to the control unit (70), wherein
multiple identical piece goods are placed in a support area (21, 31) of a storage device (20, 30),
it is detected that a last piece good has been placed in a support area (21, 31),
as soon as this is detected, the piece goods are moved along a storage direction into a removal area (25, 35) of the storage device (20, 30),
a gripping apparatus (60) of the operating unit (50) is moved into the removal area (25, 35),
the piece goods are grasped with the gripping apparatus (60) and moved from the removal area (25, 35) onto the support table (51) over an end-face edge (52) of a support table (51) of the control unit (50),
wherein the number of piece goods situated in the support area (21, 31) is determined based on piece goods data and size data of the piece goods that are detected with at least one sensor system (80, 81a, 81b, 200, 300, 250, 260), after it has been detected that a last piece good has been placed in the support area (21, 31).

2. Method according to Claim 1, **characterized in that** the piece goods data are determined by a support area sensor system (200, 300) associated with a support area (21, 31) before the piece goods are moved along the storage direction into the removal area (25, 35).

3. Method according to Claim 1 or 2, **characterized in that** the piece goods data are determined by a storage sensor system (250, 260) associated with a storage device (20, 30)
while the piece goods are moving along the storage direction or
after the piece goods have moved into the removal area (25, 35) .

4. Method according to one of Claims 1-3, **characterized in that** the piece goods data are determined by a removal area sensor system (80, 81a, 81b) associated with a removal area (25, 35) while the piece goods are moving onto the support table (51) .

5. Method according to one of Claims 1-4, **characterized in that** identifying information is transmitted to the control unit (70) before piece goods are deposited in the support area (21, 31) .

6. Method according to Claim 5, **characterized in that** the control unit (70) checks whether size data are present for the piece goods to be stored, and
if this is not the case, a user is requested to place a single piece good, whose size data are detected, together with identifying information concerning the piece good, are stored.

7. Method according to one of Claims 1-6, **characterized in that** the placement of a last piece good in a support area (21, 31) is detected by
detecting the placement of a piece good in a detection range (23, 33) of a support detection sensor (22, 32) associated with a support area (21, 31).

8. Method according to Claims 2-7, **characterized in that** the placement of a last piece good in a support area (21, 31) is determined by the support area sensor system (200, 300).

9. Method according to one of Claims 1-8, **characterized in that** the deposition location of the last piece good is determined, and the movement of the gripping apparatus (60) into the removal area (25, 35) is controlled based on the deposition location.

## Revendications

1. Procédé de stockage d'une pluralité de produits de détail identiques dans un dispositif de préparation de commandes (1), comprenant
au moins une rangée d'étagères (10), au moins un dispositif de stockage (20, 30), un dispositif de commande (70) et un appareil opérateur (50) couplé avec le dispositif de commande (70), lors duquel plusieurs produits de détail identiques sont placés dans une zone de dépose (21, 31) d'un dispositif de stockage (20, 30),
il est détecté qu'un dernier produit de détail a été placé dans une zone de dépose (21, 31),
dès que cet événement a été détecté, les produits de détail sont déplacés le long d'une direction de stockage dans une zone de prélèvement (25, 35) du dispositif de stockage (20, 30),
un dispositif de préhension (60) de l'appareil opérateur (50) est déplacé dans la zone de prélèvement (25, 35),
les produits de détail sont saisis à l'aide du dispositif de préhension (60) et sont déplacés hors de la zone de prélèvement (25, 35) sur la table de dépose (51), via un bord frontal (52) d'une table de dépose (51) de l'appareil opérateur (50),
le nombre des produits de détail placés dans la zone de dépose (21, 31) étant déterminé sur la base de données concernant les produits de détail et des données dimensionnelles des produits de détail détectées à l'aide d'au moins un système de capteurs (80, 81a, 81b, 200, 300, 250, 260), après qu'il ait été détecté qu'un dernier produit de détail a été placé dans la zone de dépose (21, 31).

2. Procédé selon la revendication 1, **caractérisé en ce que** les données concernant les produits de détail sont déterminées par un système de capteurs de zone de dépose (200, 300) affecté à une zone de dépose (21, 31), avant que les produits de détail ne soient déplacés le long du dispositif de stockage dans la zone de prélèvement (25, 35).

3. Procédé selon la revendication 1 ou 2, **caractérisé en ce que** les données concernant les produits de détail sont déterminées par un système de capteurs de stockage (250, 260) affecté à un dispositif de stockage (20, 30), lors du déplacement des produits de détail le long de la direction de stockage ou
après le déplacement des produits de détail dans la zone de prélèvement (25, 35).

4. Procédé selon l'une quelconque des revendications 1 à 3, **caractérisé en ce que** les données concernant les produits de détail sont déterminées par un système de capteurs de zone de prélèvement (80, 81a, 81b) affecté à une zone de prélèvement (25, 35) lors du déplacement des produits de détail sur la table de dépose (51).

5. Procédé selon l'une quelconque des revendications 1 à 4, **caractérisé en ce qu'**avant la dépose de produits de détail dans la zone de dépose (21, 31), des informations d'identification sont transmises au dispositif de commande (70).

6. Procédé selon la revendication 5, **caractérisé en ce que** le dispositif de commande (70) vérifie si des données dimensionnelles sont présentes pour les produits de détail qu'il s'agit de stocker,
si ce n'est pas le cas, un opérateur est invité à déposer un produit de détail individuel dont les données dimensionnelles sont détectées et mémorisées en commun avec des informations d'identification concernant le produit de détail.

7. Procédé selon l'une quelconque des revendications 1 à 6, **caractérisé en ce que** le placement d'un dernier produit de détail dans une zone de dépose (21, 31) est détecté **en ce que**
le placement d'un produit de détail dans une zone de détection (23, 33) d'un capteur détecteur de dépose (22, 32) affecté à une zone de dépose (21, 31) est détecté.

8. Procédé selon la revendication 2 à 7, **caractérisé en ce que** le placement d'un dernier produit de détail dans une zone de dépose (21, 31) est déterminé par le système de capteurs de zone de dépose (200, 300).

9. Procédé selon l'une quelconque des revendications 1 à 8, **caractérisé en ce que** le lieu de dépose du dernier produit de détail est déterminé et à l'aide du lieu de dépose, le déplacement du dispositif de préhension (60) dans la zone de prélèvement (25, 35) est commandé.
